# EUROPEAN PATENT SPECIFICATION

(11) **EP 3 838 705 B1**
(45) Date of publication and mention of the grant of the patent: **30.08.2023**
(21) Application number: 20214078.6
(22) Date of filing: 15.12.2020
(51) Int. Cl.: B61D 17/08, B61D 17/12, B61D 17/06

(54) **A RAIL VEHICLE AND A METHOD OF MANUFACTURING A RAIL VEHICLE**
SCHIENENFAHRZEUG UND VERFAHREN ZUR HERSTELLUNG EINES SCHIENENFAHRZEUGS
VÉHICULE FERROVIAIRE ET PROCÉDÉ DE FONCTIONNEMENT D'UN VÉHICULE FERROVIAIRE

(30) Priority: 18.12.2019 GB 201918683
(43) Date of publication of application: 23.06.2021
(60) Divisional application: 23184534.8
(73) Proprietor: Bombardier Transportation GmbH, 10785 Berlin (DE)
(72) Inventor: Edwards, Jonathan, Borrowash, Derb DE72 3LG (GB)
(74) Representative: Ramrath, Lukas

(56) References cited:
- EP-A1- 3 575 176
- EP-A2- 0 787 636
- EP-A2- 0 990 574
- CN-U- 208 393 369
- DE-A1- 19 521 192
- DE-A1-102014 118 241
- DE-A1-102014 118 242

## Description

The invention relates to a rail vehicle and a method of manufacturing a rail vehicle.

Rail vehicles are used for the transport of goods and/or passengers. Such vehicles usually comprise cars which have a usable space which is used for a said transport.

To provide the desired functionality of the rail vehicle or a car of a rail vehicle, it is required to arrange utility components such as electric cables or fluid pipes in or on the rail vehicle.

It is known to arrange utility components in cupboards which are located inside the vehicle, in particular in the usable space. This, however, reduces the space for arranging goods and/or passengers.

EP 3 409 560 A1 discloses a railway vehicle which includes a first car having a first end and a second car having a second end, the first and second ends being arranged in facing one another and separated by a gangway space comprising a gangway device. The first and second cars are equipped with high voltage electrical cables and low voltage electrical cables. Each car has a housing carried at its end, the electric cables all passing through this housing. The housing is not part of a vehicle sidewall.

WO 2018/001890 A1 discloses a cable tray assembly for installing one or more cable harnesses in a rail vehicle body. The cable tray assembly is attached to the vehicle wall.

EP 3 575 176 A1 discloses a rail vehicle with a car body with an outer shell and with a cable receptacle for guiding a high-voltage cable.

DE 102014 118 242 A1 discloses a rail vehicle carriage with at least one cable duct, in particular a cable duct with a clamping area and a fastening area.

DE 102014 118 241 A1 ,discloses a rail vehicle carriage with at least one laterally accessible cable duct.

EP 0 990 574 A2 discloses a car body with two roof rails and a roof end plate attached to it in an airtight and watertight manner, as well as with transverse bows which are firmly connected at the ends to the roof rails.

It is desired to provide a rail vehicle car with one or more utility component(s) in which the available space for goods and/or passengers is not affected, in particular not reduced, by the utility component(s).

There is therefore the technical problem of providing a rail vehicle car and a method for manufacturing such a rail vehicle car with at least one vehicle utility component in which the available space for goods and/or passengers is not affected, in particular reduced, by the utility component(s).

The solution to said technical problem is provided by the subject-matter with the features of the independent claims. Further advantageous embodiments are provided by the sub claims.

A rail vehicle car is proposed. The rail vehicle car can provide one car of a rail vehicle comprising multiple cars, wherein the rail vehicle comprises one or multiple rail vehicle cars. The rail vehicle can be a rail vehicle used for the carrying of cargo and/or passengers. The rail vehicle car can be a freight wagon, a passenger car but also a locomotive or a drive wagon.

The rail vehicle car comprises a vehicle wall wherein the vehicle wall encloses a usable space. The vehicle wall can also be referred to as car body.

The vehicle wall can be made of metal, in particular of aluminum. In particular, the vehicle wall denotes an element which separates an interior space, in particular a freight space or passenger space, of the rail vehicle car from an exterior space, in particular an external environment. The vehicle wall, in particular a sidewall section, can provide openings, in particular windows and door openings.

Further, the rail vehicle further can comprise at least one vehicle utility component. As an example, the vehicle utility component can be an electric line or a fluid pipe. It is, however, also possible that the vehicle utility component is provided by other means for supporting or enabling a desired functionality of the rail vehicle car.

Further, a sidewall section of the vehicle wall provides an equipment channel for arranging at least one vehicle utility component, wherein the equipment channel is arranged outside the usable space.

A sidewall section can be a section providing a long side of the rail vehicle car. Alternatively, the sidewall section can be a section providing an end face section of the rail vehicle car, e.g. a section of the sidewall at the first end or at the second end of the rail vehicle car. In the latter case, the section can be a section of the sidewall facing another rail vehicle car or a gangway device or providing connecting means for attaching a gangway device to the rail vehicle car. Such an end face section can provide a door opening which provides a passage between the interior space and a gangway device.

Further to the at least one sidewall section, the vehicle wall can also comprise a roof section and a floor section. The roof section and the floor section can be connected by the sidewall section. In this case, the usable space can also be enclosed by the roof section and the floor section of the vehicle wall.

The equipment channel can be arranged within the vehicle sidewall section and thus between an outer surface and an inner surface of said vehicle sidewall section.

It is, however, also possible that the equipment channel is provided by or arranged in the roof section or in a roof-sided section of the vehicle wall and/or in a further sidewall section of the vehicle wall. In particular, the equipment channel can extend along a first sidewall section, along the roof section and then along a further sidewall section.

In particular, the equipment channel is not provided by an additional element which is attached to the vehicle sidewall, in particular to an inner surface of the vehicle sidewall. More particular, the portion of the vehicle sidewall section which provides the equipment channel does not protrude or extend from the remaining portions of the vehicle sidewall section into the interior space of the rail vehicle car. In other words, the equipment channel can be an integral part of the vehicle sidewall.

Further, the equipment channel is provided by a recess or a groove in the vehicle sidewall section. This recess or groove is opened towards the exterior space. Further, the rail vehicle car can comprise a cover element, wherein the recess or groove can be covered by the cover element. If the groove or recess is covered, the cover element can provide a sidewall element. Covering the sidewall by such a cover element advantageously allows an easy accessibility to the at least one vehicle utility component arranged in the equipment channel while also providing a good mechanical protection for this vehicle utility component.

Further, the at least one vehicle utility component can be arranged within the equipment channel. This means that at least one part of the vehicle utility component is arranged in the equipment channel and thus within the sidewall of the rail vehicle car.

It is possible that the equipment channel extends from the lower, floor-sided end or section of the vehicle sidewall section to the upper, roof-sided end or section of the vehicle sidewall section.

Having the vehicle sidewall section providing the equipment channel advantageously allows to arrange the at least one vehicle utility component without reducing the interior space of the rail vehicle car, in particular the space for the transport of goods and/or passengers. Further, a good protection for the vehicle utility component is provided. Also, a simple installation of the vehicle utility component can be provided, in particular an installation without the necessity of accessing the interior space of the rail vehicle car. This is in particular of advantage if the vehicle utility component is not required for any functionality which is desired to be provided inside the rail vehicle car.

If the vehicle utility component is an electric cable, e.g. a brake resistor cable, the fact of having said cable arranged inside the equipment channel further improves an EMC (electromagnetic compatibility) with respect to other electric or electronic components arranged in the interior space of the vehicle, in particular at an inner surface of the end face section such cables for transmitting control signals, communication signals, lower power signals or 110 V DC cables.

If the vehicle utility component is a high tension cable, the fact of having said cable arranged inside the equipment channel further allows a safe arrangement of the high tension cable. In particular in the case of an explosion of the high tension cable, the arrangement in the equipment channel reduces or excludes an impact to the interior space. Further, the explosion can be directed outside the interior space downward to the tracks, in particular by a corresponding opening of the equipment channel. As the vehicle wall is usually made of a stable material such as steel, the arrangement within the equipment channel also allows to avoid the use of a separate steel container, in particular in the interior space, which is bulky, heavy and expensive.

Also, an easy installation of such a high tension cable is allowed since is can be placed in the equipment channel after the vehicle has been assembled. This is in particular of advantage if the high tension cable has large connectors which are firstly difficult to thread through the interior space and also require a large installation space caused by said threading. With respect to the EMC, the impact of the current/voltage carried by the high tension cable on devices or passenger in the interior space is also advantageously reduced.

Further, routing electric cables through the equipment channel outside the interior space instead through the interior space, e.g. for connecting elements such as converters or transformers hanging off the underside or underframe of the rail vehicle car to elements on the outside of the roof, advantageously allows to avoid the integration of a sealing element between the interior and the exterior space such as a gland plate which requires additional building space and additional installation time.

If the vehicle utility component is a water pipe, the fact of having said cable arranged inside the equipment channel allows to keep water away from sensitive control or communication cables or wires which can e.g. be arranged at an inner surface of the end face section. Thus, an operation safety of the rail vehicle is improved.

According to the invention, the equipment channel is arranged in an end face section of the vehicle sidewall. This end face section can provide a gangway interface section of the rail vehicle car. A gangway section can denote the section in which a gangway device can be arranged. This section is arranged in between two rail vehicle cars, in particular between a first end of the first rail vehicle car and a second end of a second rail vehicle car. The end face section of the rail vehicle car can denote a section of the vehicle sidewall facing this gangway section. It is also possible that the end face section denotes a section of the vehicle wall to which the gangway section is attached, in particular by a suitable means of attachment, for example screws.

In other words, the end face section of the sidewall can be arranged at a front end of the rail vehicle car or at the rear end of the rail vehicle car.

In particular, the equipment channel can be arranged in a section of the sidewall which encloses or surrounds the passage between the rail vehicle car, in particular the interior space of the rail vehicle car, and the gangway device. This means that the equipment channel can be arranged in a rear or front end sidewall section.

This advantageously provides an easy accessibility to the at least one vehicle utility component, in particular after the rail vehicle car has been assembled.

In a further embodiment, the rail vehicle car comprises a removable cover element for covering the equipment channel. The removable cover element and corresponding advantages have been explained before. The removable cover element can be a cover plate. In particular, the removable cover element can be made of plastic.

In a further embodiment, at least one support element for supporting the vehicle utility component is arranged in the equipment channel. Such the support element can e.g. be provided by a pin, an U-bolt, a bracket or any other element suitable for supporting the vehicle utility component. It is possible that the vehicle utility component is attached to the support element, e.g. by fastening means such as a cable strap or any other suitable fastening means. It is possible that the support element extends into the equipment channel or even through the equipment channel. It is further possible that the cover element is attached to the vehicle sidewall by attaching the cover element to such a support element, e.g. by a screw, or that the cover element is attached to the vehicle wall by means of said support element.

If the equipment channel is provided by the hollow space of the hollow profile element, the hollow profile element can have through passages between two hollow spaces, in particular within an inner element or section of the hollow profile element. Such a through passage can also provide a support element. In this case, support can be provided by guiding the vehicle utility component through the through hole.

This advantageously allows a stable arrangement of the vehicle utility component within the equipment channel.

In a further embodiment, the vehicle sidewall, in particular the sidewall section, comprises at least one hollow profile element, wherein the equipment channel is provided by the hollow profile element. The vehicle wall can be made of at least one, preferably multiple, hollow profile elements. That the equipment channel is provided by the hollow profile element can mean that an inner volume of the hollow profile element provides the equipment channel. In other words, a hollow space inside the hollow profile element can provide the equipment channel. It is possible that said hollow space extends from the aforementioned lower, floor-sided end or section of the vehicle sidewall section to the upper, roof-sided end or section of the vehicle sidewall section.

Having the equipment channel be provided by the hollow profile element advantageously allows to provide a robust and stable vehicle wall while also providing an equipment channel without reducing the interior space of the rail vehicle car.

In a further embodiment, the hollow profile element provides more than one hollow space, wherein the equipment channel is provided by one or more of said hollow space(s). Different hollow spaces of the hollow profile element can be separated by inner sections of the sidewall, in particular by profile sections such as plates. Having more than one hollow space separated by inner sections advantageously increases the mechanical stability of the vehicle sidewall. It is also possible that multiple hollows spaces provide the equipment channel, wherein each hollow space may form a subchannel of the equipment channel. Different vehicle utility components can be arranged in different subchannels. This advantageously allows to isolate or separate different components from one another, in particular in order to meet EMC requirements. It is e.g. possible to provide one subchannel for high tension cables and another subchannel for low tension cables.

In a further embodiment, the vehicle wall, in particular the sidewall section, more particular the hollow profile element, provides at least one groove for arranging an edge section of a removable cover element for covering the equipment channel.

The groove for arranging an edge section of the removable cover element justly allows a reliable mounting of the cover element to the vehicle wall. In addition to said groove, the cover element can also be fastened to the vehicle wall by further attachment means, in particular means for the detachable connection between the cover element and the vehicle sidewall such as screws.

In a further embodiment, the equipment channel extends along a sidewall section from a floor to a roof of the rail vehicle car. This advantageously allows to provide a connection between the space under the rail vehicle car, in particular a space in which components such as a brake, a generator, a bogie, a battery or other components of the rail vehicle car are arranged, to a space above or on top the rail vehicle car, in particular a space in which components such as load resistors, an air conditioning unit, a current collector or other components are arranged.

It is in particular possible that the equipment channel extends in a long side section or in an end face section from the floor to the roof of the rail vehicle car, wherein the equipment channel further extends along the roof within said sidewall section or within the aforementioned roof section. Preferably, the equipment channel then further extends in another long side section or in the end face section from the roof to the floor. This advantageously provides a simple arrangement of one or even multiple vehicle utility component(s).

In a further embodiment, the rail vehicle car comprises or provides at least one roof-sided outlet of the equipment channel, at least one floor-sided outlet of the equipment channel and/or a connecting terminal for connecting the utility component to an external system.

The outlet can e.g. be provided by a through hole connecting the equipment channel to the exterior or interior space. The connecting terminal can e.g. be a terminal for providing an electrical connection, a fluid connection or any other kind of connection which is desired. It is also possible that the outlet is provided by the cover element.

This advantageously allows a simple installation and connection of the vehicle utility component to other rail vehicle components such as resistors or brakes or other units.

In a further embodiment, the connecting terminal is provided on the cover element or on a lower end of the equipment channel. This advantageously allows a simple access to the vehicle utility component by e.g. the user such as maintenance personnel.

In a further embodiment, the utility component is an electric cable. The electric cable can provide an electric connection between an electric or electronic component arranged in a space below the rail vehicle car, such as a generator or electromechanical brake, and an electrical or electronic component arranged in a space above the rail vehicle car, e.g. on the top of the roof of the rail vehicle car, such as a brake resistor.

Alternatively, the utility component is the fluid supply pipe. The fluid supply pipe can in particular be water supply pipe. The water supply pipe can provide water supply for components arranged above the rail vehicle car such as an air conditioning unit and/or for components arranged in the interior space, e.g. a restroom.

In summary, this advantageously allows reliable electric and fluid connection within a rail vehicle car without reducing the interior space for cargo and/or passengers.

Further proposed is a method of manufacturing rail vehicle car which comprises the steps of
- providing a vehicle wall of the rail vehicle car, wherein a sidewall section of the vehicle wall provides at least one equipment channel outside the usable space enclosed by the vehicle wall, wherein the equipment channel is provided by a recess or a groove in the sidewall section which is opened towards the exterior space.

It is further possible to provide at least one utility component of the rail vehicle car, and to arrange the at least one utility component within the equipment channel.

In particular, the equipment channel can be provided within the sidewall section, i.e. as an integral part or section of the vehicle wall.

The proposed method advantageously allows to provide a rail vehicle car according to one of the embodiments described in this invention. Thus, the method can comprise all the steps which are necessary to provide such a rail vehicle car.

The invention will be described with reference to the attached figures. These figures show:
- Figure 1: a schematic perspective view of a rail vehicle car according to a first embodiment of the invention,
- Figure 2: a cross-section through a portion of the sidewall of the rail vehicle car shown in figure 1,
- Figure 3: a schematic perspective view of a rail vehicle car according to a second embodiment of the invention,
- Figure 4: a cross-section through a portion of the sidewall of the rail vehicle car shown in figure 3,
- Figure 5: a schematic perspective view of a rail vehicle car according to a third embodiment of the invention, and
- Figure 6: a cross-section through a portion of the sidewall of the rail vehicle car shown in figure 5.

In the following, the same reference numerals denote the same or similar technical features.

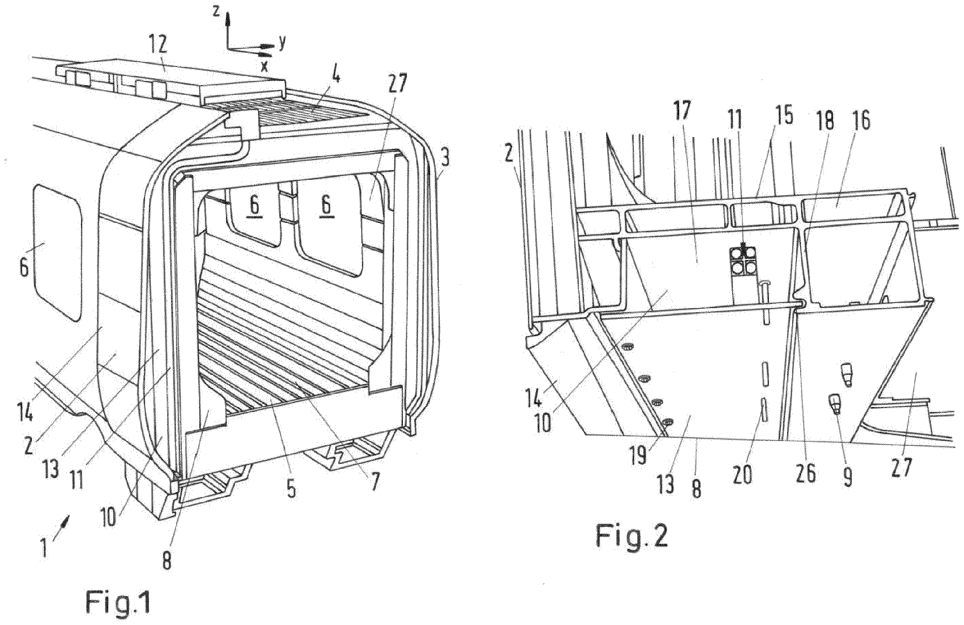

Figure 1 shows a perspective view of the rail vehicle car 1 according to a first embodiment of the invention. The rail vehicle car 1 comprises a vehicle wall 14 with a sidewall provided by a first long side section 2, a second long side section 3 and an end face section 8. The vehicle wall further comprises a roof section 4 and a floor section 5. The long side sections 2, 3 and the end face section 8 extend from the floor section 5 to the roof section 4. Shown are window openings 6 within the second long side section 3 and within the first long side section 2. The sections 2, 3, 8 of the sidewall, the floor section 5 and the roof section 4 enclose an interior space 7 of the rail vehicle car 1 wherein this interior space 7 is a space for cargo and/or passengers. It's in particular possible to arrange seats for passengers within this interior space 7. It is clear from the embodiment shown in figure 1, that the wall sections 2, 3, 4, 5, 8 separate this interior space 7 from an exterior, environmental space of the rail vehicle car 1.

Further shown is that the end face section 8 is arranged at a front or first end of the rail vehicle car 1 and provides a gangway interface section. It is possible to attach a gangway to the rail vehicle car 1, in particular to this end face section 8, e.g. by using fastening bolts 9 (see figure 2).

Further shown is a coordinate system comprising a vertical axis z, the longitudinal axis x and lateral axis y. These axes x, y, z provide a Cartesian coordinate system, wherein the vertical axis z extends from the floor section 5 to the roof section 4 and can be oriented parallel to the direction of the gravitational force. Further, the vertical axis z can be a yaw axis of the rail vehicle car 1. The longitudinal axis x can be a roll axis of the rail vehicle car 1, wherein the lateral axis y can be a pitch axis of the rail vehicle car 1.

Further shown is an equipment channel 10 which extends within the end face section 8 from the lower, floor-sided section of the rail vehicle car 1 to the roof section 4, then along and within the roof section 4, and then from the roof section 4 to the floor section 5.

A first section of the equipment channel 10 which is provided within the end face section 8 in between a door opening 27 and the first long side section 2 and can extend along a vertical direction which is indicated by an arrowhead of the vertical axis z, e.g. from the floor section 5 to the roof section 4.

The second section of the equipment channel 10 which is provided at a roof-sided end of end face section 8 above the door opening 27 and can extend along the lateral direction which is indicated by an arrowhead of the lateral axis y, e.g. from the first long side section 2 to the second long side section 3. The third section of the equipment channel 10 which is provided between the door opening 27 and the second long side 3 can extend against the vertical direction , e.g. from the roof section 4 to the floor section 5.

It is shown that the equipment channel 10 is arranged inside the wall 14, in particular inside the end face section 8 of the sidewall.

Further shown is a brake resistor cable 11 which is arranged inside the equipment channel 10 and which extends from a space below the rail vehicle car 1, in particular below the floor section 5 of the rail vehicle car 1 to a space above the rail vehicle car 1, in particular to the roof section 4. This brake resistor cable 11 connects an electromechanical brake, e.g. provided by a generator, which is coupled to the wheel of the rail vehicle car 1, to a brake resistor 12 which is arranged on top of the roof 4 of the rail vehicle car 1. In the embodiment shown in figure 1, the brake resistor cable 11 is arranged in the aforementioned first section of the equipment channel 10 and in a portion of the second section of the equipment channel 10. In this case, the equipment channel 10 can comprise an inlet for the brake resistor cable 11 at the lower end of the first section of the equipment channel 10 and an outlet for the brake resistor cable 11 within the second section. The inlet can be provided by a through hole between the space below the rail vehicle car 1 and the first section of the equipment channel 10, wherein the outlet can also be provided by a through hole between the second section of the equipment channel 10 and the space above the rail vehicle car 1.

The inlet and/or the outlet can comprise sealing means for providing a sealed connection between the exterior space and the volume of the equipment channel 10.

Further shown is a cover element 13 which is attached to the end face section 8 of the vehicle wall 14.

Figure 2 shows a cross-section through the end face section 8, in particular through the aforementioned first section of the equipment channel 10. It is shown that the end face section 8 is provided by a hollow profile element 15 which has multiple hollow spaces 16. For the ease of illustration, only one of said hollow spaces 16 is referenced by a corresponding reference numeral.

This hollow profile element 15 provides a groove 17 which forms the first section of the equipment channel 10. In particular, the groove 17 is provided such that it is opened towards the front end of the rail vehicle car 1, in particular towards the side facing the gangway. The hollow spaces 16 are separated by inner sections 18 of the hollow profile element 15, wherein again for the ease of illustration, only one inner element 18 is referenced with a corresponding reference numeral.

Also shown is the cover element 13 which is attached to the vehicle wall 14 at the end face section 8. A first long side of the cover element 13 is attached directly to the hollow profile element 15 by screws 19 which do not extend through the equipment channel 10. It is shown that the first long side of the cover element 13 abuts the hollow profile element 15 in a connected state. Further, the hollow profile element 15 provides a groove 26 for receiving the second long side of the cover element 13. Thus, the cover element 13 is also attached to the hollow profile element by inserting this edge into the groove 26.

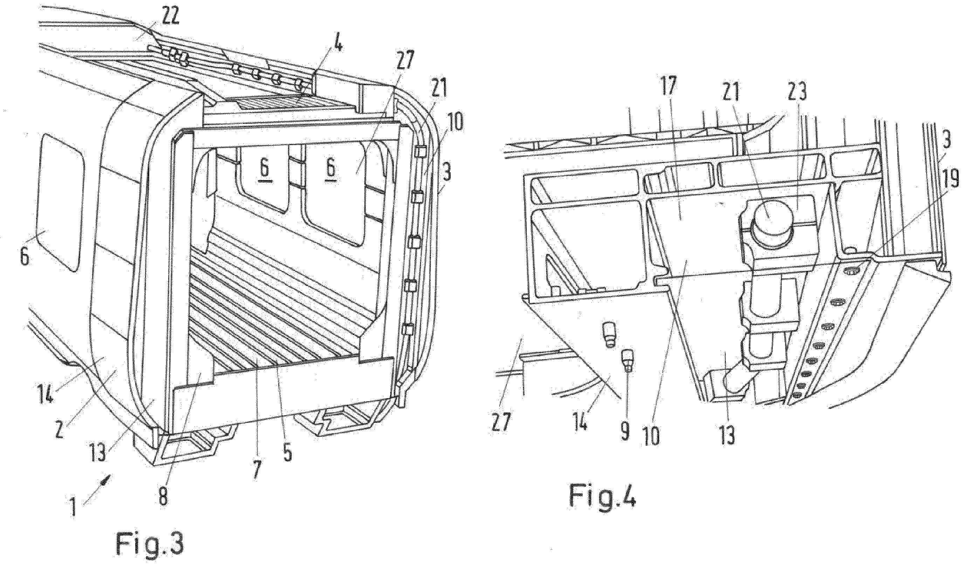

Further shown are screws 20 which extend into the equipment channel 10 and provide support elements for the brake resistor cable 11. In particular, the brake resistor cable 11 can be attached to these screws 20 by means of a cable tie or cable strap. Preferably, however, the screws 20 are used to attach cable clamps 23 (see also Fig. 4) to the bottom side of the groove 17 forming the equipment channel 10, wherein these clamps 23 are then used to clamp the brake resistor cable 11. It is also possible that the screws 20 extend through the equipment channel 10 and are used to attach the cover element 13, in particular the second long side, to the hollow profile element 15.

Figure 3 shows a perspective view of the rail vehicle car 1 according to a second embodiment of the invention, wherein Fig. 4 shows a cross-section through the end face section 8, in particular of the third section of the equipment channel 10. The embodiment shown in Fig. 3 and Fig. 4 is essentially similar to the embodiment shown in Fig. 1.

In contrast to the embodiment shown in Fig. 1, a high tension cable 21 is arranged in the third section of the equipment channel 10, in particular in the section extending in between the door opening 27 and the second long side section 3. This high tension cable 21 can e.g. be a 25 kV cable which connects a current collector 22 installed on the roof 4 of the rail vehicle car 1 to an electric machine (not shown) installed in a space below the rail vehicle car 1. In this case, the equipment channel 10 can comprise an inlet for the high tension cable 21 within the second section of the equipment channel 10 and an outlet for said high tension cable 21 at the lower end of the third section of the equipment channel 10.

Further shown is that no vehicle utility component is arranged in the aforementioned first section of the equipment channel 10. It is, however, possible to arrange another vehicle utility component such as the brake resistor cable 11 shown in Fig. 1 in said first section.

Further shown are brackets 23 which are arranged in the equipment channel 10. These brackets 23 can be attached to a bottom side of the groove 17 provided by the hollow profile element 15 and are used as support elements for the high tension cable 21.

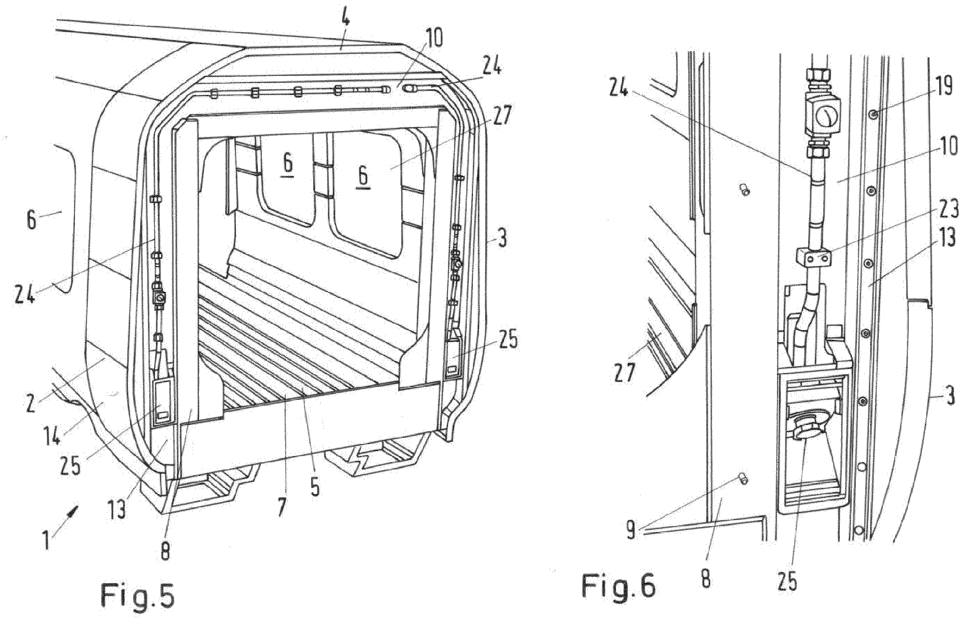

Figure 5 shows a perspective view of the rail vehicle car 1 according to a third embodiment of the invention, wherein Fig. 6 shows a detailed view on the end face section 8, in particular of the third section of the equipment channel 10. The embodiment shown in Fig. 5 and Fig. 6 is essentially similar to the embodiment shown in Fig. 1.

In contrast to the embodiment shown in Fig. 1, water pipes 24 are arranged in the first, the second and the third section of the equipment channel 10. A first water pipe 24 can extend along the first long side section 2 in a space between the door opening 27 of the end face section 8 and the first long side section 2 and also along a part of the roof section 4. A second water pipe 24 can extend along the second long side section 3 in a space between the door opening 27 of the end face section 8 and the second long side section 3 and also along a part of the roof section 4.

In this case, the equipment channel 10 can comprise outlets for said water pipes 24, in particular in the roof section 4 of the vehicle wall 14.

Further shown are water connecting terminals 25 which are arranged in a lower part of the first and the third section of the equipment channel 10 and by which water from the exterior can be supplied to the water pipes 24. It is possible that the cover element 13 does not cover the water connecting terminals 25.

These water pipes 24 can connect said terminals 25 to a water tank (not shown) which can be arranged on the roof 4. This water tank can be used to provide water supply for sanitary equipment such as toilets and washbasins. Thus, maintenance staff can provide water to the tank by connecting a water supply to the terminals 25. Having water pipes 24 in each side of the end face section 8 allows to fill the water tank from both sides of the rail vehicle car 1.

Again shown are brackets 23 which are arranged in the equipment channel 10 for supporting the water pipes 24.

### References

- 1: rail vehicle car
- 2: first long side section
- 3: second long side section
- 4: roof section
- 5: floor section
- 6: window opening
- 7: interior space
- 8: end face section
- 9: bolt
- 10: equipment channel
- 11: brake resistor cable
- 12: resistor
- 13: cover element
- 14: vehicle wall
- 15: hollow profile element
- 16: hollow space
- 17: groove
- 18: inner section
- 19: screw
- 20: screw
- 21: high tension cable
- 22: current collector
- 23: bracket
- 24: water pipe
- 25: water connecting terminal
- 26: groove
- 27: door opening

## Claims

1. A rail vehicle car (1), wherein the rail vehicle car (1) comprises a vehicle wall (14) enclosing a usable space (7), wherein a sidewall section (2, 3, 8) of the vehicle wall (14) provides an equipment channel (10) for receiving at least one vehicle utility component, wherein the equipment channel (10) is arranged outside the usable space (7), wherein the equipment channel (10) is provided by a recess or a groove in the sidewall section (2, 3, 8) which is opened towards the exterior space,
**characterized in that**
the equipment channel (10) is arranged in an end face section (8) of the vehicle wall (14).

2. The rail vehicle car according to claim 1, **characterized in that** the rail vehicle car (1) comprises a removable cover element (13) for covering the equipment channel (10).

3. The rail vehicle car according to one of the preceding claims, **characterized in that** at least one support element for supporting the vehicle utility component is arranged in the equipment channel (10).

4. The rail vehicle car according to one of the preceding claims, **characterized in that** the vehicle wall (14) comprises at least one hollow profile element (15), wherein the equipment channel (10) is provided by the hollow profile element (15).

5. The rail vehicle car according to claim 4, **characterized in that** the hollow profile element (15) provides more than one hollow space (16), wherein the equipment channel (10) is provided by one or more of said hollow space(s) (16).

6. The rail vehicle car according to one of the preceding claims, **characterized in that** the vehicle wall (14) provides at least one groove (26) for arranging an edge section of a removable cover element (13) for covering the equipment channel (10).

7. The rail vehicle car according to one of the preceding claims, **characterized in that** the equipment channel (10) extends in a sidewall section (2, 3, 8) from a floor to a roof of the rail vehicle car (1).

8. The rail vehicle car according to one of the preceding claims, **characterized in that** the rail vehicle car (1) comprises or provides at least one roof-sided outlet of the equipment channel (10), at least one floor-sided outlet of the equipment channel (10) and/or a connecting terminal (25) for connecting the utility component to an external system.

9. The rail vehicle according to claim 8, **characterized in that** the connecting terminal (25) is provided on a cover element (13) or on a lower end of the equipment channel (10).

10. The rail vehicle according to one of the preceding claims, **characterized in that** the utility component is an electric cable (11, 21) or fluid supply pipe (24).

11. A method of manufacturing a rail vehicle car (1), comprising the steps of
- providing a vehicle wall (14) of the rail vehicle car (1), wherein a sidewall section (2, 3, 8) of the vehicle wall (14) provides at least one equipment channel (10) outside an usable space (7) enclosed by the vehicle wall (14), wherein the equipment channel (10) is provided by a recess or a groove in the sidewall section (2, 3, 8) which is opened towards the exterior space and wherein the equipment channel (10) is arranged in an end face section (8) of the vehicle wall (14).

## Patentansprüche

1. Schienenfahrzeugwagen (1), wobei der Schienenfahrzeugwagen (1) eine Fahrzeugwand (14) aufweist, die einen Nutzraum (7) umschließt, wobei ein Seitenwandabschnitt (2, 3, 8) der Fahrzeugwand (14) einen Ausstattungskanal (10) zur Aufnahme mindestens einer Fahrzeugnutzkomponente aufweist, wobei der Ausstattungskanal (10) außerhalb des Nutzraums (7) angeordnet ist, wobei der Ausstattungskanal (10) durch eine Ausnehmung oder eine Nut im Seitenwandabschnitt (2, 3, 8) gebildet ist, die zum Außenraum hin geöffnet ist, **dadurch gekennzeichnet, dass**
der Ausstattungskanal (10) in einem stirnseitigen Abschnitt (8) der Fahrzeugwand (14) angeordnet ist.

2. Schienenfahrzeugwagen nach Anspruch 1, **dadurch gekennzeichnet, dass** der Schienenfahrzeugwagen (1) ein abnehmbares Abdeckelement (13) zur Abdeckung des Ausstattungskanals (10) aufweist.

3. Schienenfahrzeugwagen nach einem der vorhergehenden Ansprüche, **dadurch gekennzeichnet, dass** im Ausstattungskanal (10) mindestens ein Stützelement zur Abstützung der Fahrzeugnutzkomponente angeordnet ist.

4. Schienenfahrzeugwagen nach einem der vorhergehenden Ansprüche, **dadurch gekennzeichnet, dass** die Fahrzeugwand (14) mindestens ein Hohlprofilelement (15) aufweist, wobei der Ausstattungskanal (10) von dem Hohlprofilelement (15) gebildet wird.

5. Schienenfahrzeugwagen nach Anspruch 4, **dadurch gekennzeichnet, dass** das Hohlprofilelement (15) mehr als einen Hohlraum (16) aufweist, wobei der Ausstattungskanal (10) durch einen oder mehrere dieser Hohlräume (16) gebildet wird.

6. Schienenfahrzeugwagen nach einem der vorhergehenden Ansprüche, **dadurch gekennzeichnet, dass** die Fahrzeugwand (14) mindestens eine Nut (26) zur Anordnung eines Randabschnitts eines abnehmbaren Abdeckelements (13) zur Abdeckung des Ausstattungskanals (10) aufweist.

7. Schienenfahrzeugwagen nach einem der vorhergehenden Ansprüche, **dadurch gekennzeichnet, dass** sich der Ausstattungskanal (10) in einem Seitenwandabschnitt (2, 3, 8) von einem Boden bis zu einem Dach des Schienenfahrzeugwagens (1) erstreckt.

8. Schienenfahrzeugwagen nach einem der vorhergehenden Ansprüche, **dadurch gekennzeichnet, dass** der Schienenfahrzeugwagen (1) mindestens einen dachseitigen Auslass des Ausstattungskanals (10), mindestens einen bodenseitigen Auslass des Ausstattungskanals (10) und/oder eine Anschlussstelle (25) zum Anschluss der Nutzkomponente an ein externes System aufweist oder bildet.

9. Schienenfahrzeug nach Anspruch 8, **dadurch gekennzeichnet, dass** die Anschlussstelle (25) an einem Abdeckelement (13) oder an einem unteren Ende des Ausstattungskanals (10) vorgesehen ist.

10. Schienenfahrzeug nach einem der vorhergehenden Ansprüche, **dadurch gekennzeichnet, dass** die Nutzkomponente ein elektrisches Kabel (11, 21) oder eine Flüssigkeitsversorgungsleitung (24) ist.

11. Verfahren zur Herstellung eines Schienenfahrzeugwagens (1), das die folgenden Schritte umfasst
- Bereitstellen einer Fahrzeugwand (14) des Schienenfahrzeugwagens (1), wobei ein Seitenwandabschnitt (2, 3, 8) der Fahrzeugwand (14) außerhalb eines von der Fahrzeugwand (14) umschlossenen Nutzraumes (7) mindestens einen Ausstattungskanal (10) bildet, wobei der Ausstattungskanal (10) durch eine zum Außenraum hin geöffnete Aussparung oder Nut im Seitenwandabschnitt (2, 3, 8) gebildet ist und wobei der Ausstattungskanal (10) in einem stirnseitigen Abschnitt (8) der Fahrzeugwand (14) angeordnet ist.

## Revendications

1. Voiture de véhicule ferroviaire (1), dans laquelle la voiture de véhicule ferroviaire (1) comprend une paroi de véhicule (14) entourant un espace utilisable (7), dans laquelle une section de paroi latérale (2, 3, 8) de la paroi de véhicule (14) fournit un canal d'équipement (10) pour recevoir au moins un composant utilitaire de véhicule (14), dans lequel le canal d'équipement (10) est disposé à l'extérieur de l'espace utilisable (7), dans lequel le canal d'équipement (10) est fourni par un renfoncement ou une rainure dans la section de la paroi latérale (2, 3, 8) qui est ouverte vers l'espace extérieur, **caractérisé par le fait que**
le canal d'équipement (10) est disposé dans une section de la face d'extrémité (8) de la paroi du véhicule (14).

2. Le véhicule ferroviaire selon la revendication 1, **caractérisé en ce que** le véhicule ferroviaire (1) comprend un élément de couverture amovible (13) pour couvrir le canal d'équipement (10).

3. Le véhicule ferroviaire selon l'une des revendications précédentes, **caractérisé par le fait qu'**au moins un élément de support pour l'élément utilitaire du véhicule est disposé dans le canal d'équipement (10).

4. Le véhicule ferroviaire selon l'une des revendications précédentes, **caractérisé en ce que** la paroi du véhicule (14) comprend au moins un élément profilé creux (15), dans lequel le canal d'équipement (10) est fourni par l'élément profilé creux (15).

5. Véhicule ferroviaire selon la revendication 4, **caractérisé en ce que** l'élément profilé creux (15) fournit plus d'un espace creux (16), dans lequel le canal d'équipement (10) est fourni par un ou plusieurs de ces espaces creux (16).

6. Le véhicule ferroviaire selon l'une des revendications précédentes, **caractérisé en ce que** la paroi du véhicule (14) fournit au moins une rainure (26) pour arranger une section de bord d'un élément de couverture amovible (13) pour couvrir le canal d'équipement (10).

7. Le véhicule ferroviaire selon l'une des revendications précédentes, **caractérisé par le fait que** le canal d'équipement (10) s'étend dans une section de paroi latérale (2, 3, 8) d'un plancher à un toit du véhicule ferroviaire (1).

8. Le véhicule ferroviaire selon l'une des revendications précédentes, **caractérisé par le fait que** le véhicule ferroviaire (1) comprend ou fournit au moins une sortie côté toit du canal d'équipement (10), au moins une sortie côté sol du canal d'équipement (10) et/ou une borne de connexion (25) pour connecter le composant utilitaire à un système externe.

9. Véhicule ferroviaire selon la revendication 8, **caractérisé par le fait que** la borne de connexion
(25) est prévue sur un élément de couverture (13) ou sur une extrémité inférieure du canal d'équipement (10).

10. Véhicule ferroviaire selon l'une des revendications précédentes, **caractérisé en ce que** le composant utilitaire est un câble électrique (11, 21) ou un tuyau d'alimentation en fluide (24).

11. Procédé de fabrication d'un véhicule ferroviaire (1), comprenant les étapes suivantes
- fournir une paroi de véhicule (14) du véhicule ferroviaire (1), dans laquelle une section de paroi latérale (2, 3, 8) de la paroi de véhicule (14) fournit au moins un canal d'équipement (10) à l'extérieur d'un espace utilisable (7) entouré par la paroi de véhicule (14), dans lequel le canal d'équipement (10) est fourni par un renfoncement ou une rainure dans la section de paroi latérale (2, 3, 8) qui est ouverte vers l'espace extérieur et dans lequel le canal d'équipement (10) est disposé dans une section de face d'extrémité (8) de la paroi de véhicule (14).
